# EUROPÄISCHE PATENTSCHRIFT

(11) **EP 0 446 708 B1**
(45) Veröffentlichungstag und Bekanntmachung des Hinweises auf die Patenterteilung: **04.01.1995**
(21) Anmeldenummer: 91102909.8
(22) Anmeldetag: 28.02.1991
(51) Int. Cl.: B22F 3/22, B22F 1/00

(54) **Thermoplastische Massen für die Herstellung metallischer Formkörper**
Thermoplastic materials for manufacturing metallic articles
Matières thermoplastiques pour la préparation d'articles métalliques

(30) Priorität: 08.03.1990 DE 4007345
(43) Veröffentlichungstag der Anmeldung: 18.09.1991
(73) Patentinhaber: BASF Aktiengesellschaft, 67063 Ludwigshafen (DE)
(72) Erfinder: Sterzel, Hans-Josef, Dr., W-6701 Dannstadt-Schauernheim (DE); Ter Maat, Johan Herman Hendrik, W-6800 Mannheim 1 (DE)

(56) Entgegenhaltungen:
- EP-A- 0 114 746
- EP-A- 0 210 502
- EP-A- 0 413 231
- EP-A- 0 424 739
- DE-A- 2 305 341

## Beschreibung

Die vorliegende Erfindung betrifft thermoplastische Massen für die Herstellung metallischer Formkörper, enthaltend
A) 40 - 65 Vol.% eines sinterbaren pulverförmigen Metalls oder einer pulverförmigen Metallegierung oder deren Mischungen,
B) 35 - 60 Vol.% einer Mischung aus
   B1) 85 - 100 Gew.-% eines Polyoxymethylenhomo- oder -copolymerisats und
   B2) 0 - 15 Gew.-% eines in B1) homogen gelösten oder mit einer mittleren Teilchengröße von weniger als 1 µm in B1) dispergierten Polymerisats,
   als Bindemittel, und
C) 0 - 5 Vol.% eines Dispergierhilfsmittels.

Weiterhin betrifft die Erfindung ein Verfahren zur Herstellung solcher Massen. Außerdem betrifft die Erfindung die Verwendung derartiger thermoplastischer Massen zur Herstellung von metallischen Formkörpern sowie die metallischen Formkörper selbst. Schließlich betrifft die Erfindung auch ein Verfahren zur Entfernung des Bindemittels aus einem Formkörper aus einer derartigen thermoplastischen Masse.

Es ist bekannt, Formteile aus anorganischen Materialien dadurch herzustellen, daß man ein Keramikpulver oder ein Metallpulver mit einem thermoplastischen Harz vermischt, die Mischung zu einem grünen Formkörper verformt, das thermoplastische Harz entfernt und anschließend diesen Grünling zu dem Formkörper versintert. Gemäß der EP-PS 125 912 wird der Grünling vor seiner Sinterung zu seiner im wesentlichen endgültigen Gestalt bearbeitet. Als thermoplastisches Harz bzw. Bindemittel werden z.B. Polystyrol, Polypropylen, Polyethylen und Ethylen-Vinylacetat-Copolymere eingesetzt. Diese Bindemittel werden aus dem Grünling durch Erhitzen auf Temperaturen von 300 bis 550°C während 3 bis 8 Stunden entfernt. Dabei werden die Bindemittel thermisch gespalten. Es muß sehr vorsichtig und langsam auf diese Temperaturen erhitzt werden, damit der Grünling nicht durch unkontrollierten Zerfall der organischen Substanz und damit verbundener Rißbildung geschädigt wird. Aus diesem Grunde soll die Aufheiztemperatur nur 4°C/Stunde betragen. In der US-PS 4 671 912 werden sogar niedrigere Aufheiztemperaturen von 1 bis 2°C/Stunde, zumindest solange, bis die Hälfte des Bindemittels entfernt ist, empfohlen. Diese langen Aufheizperioden von mehreren Tagen vermindern die Wirtschaftlichkeit dieser Verfahren stark.

Zur Beschleunigung der Aufheizzeiten wird in der EP-PS 115 104 empfohlen, als Bindemittel ein Gemisch aus einem oxidierten Paraffinwachs oder einem oxidierten mikrokristallinen Wachs mit einer höheren Fettsäure einzusetzen. In der EP-PS 114 746 werden thermoplastische Massen beschrieben, die nichtmetallische Pulver enthalten. Das für die Entfernung des Bindemittels beschriebene Verfahren führt bei Massen, die Metallpulver oder Pulver von Metallegierungen enthalten, zu nicht völlig zufriedenstellenden Ergebnissen.

Ein Nachteil bei allen diesen Verfahren, bei denen Thermoplaste oder Wachse eingesetzt werden, besteht darin, daß der Grünkörper zwecks pyrolytischer Entfernung des Bindemittels auf Temperaturen oberhalb des Erweichungspunktes des Bindemittels erhitzt werden muß, wodurch die Gefahr einer Verformung besteht. Zur Vermeidung einer solchen Verformung wird daher in der US-PS 4 708 838 und in der JP-OS 62/12674 vorgeschlagen, den Grünkörper in einem keramischen Pulver mit hoher thermischer Stabilität einzubetten.

Es ist aber auch bekannt, das Bindemittel aus dem Grünling nicht pyrolytisch sondern durch Extraktion mit einem Lösungsmittel zu entfernen. Gemäß der JP-OS 62/278160 wird als Lösungsmittel überkritisches Kohlendioxid bei 60°C und einen Druck von 200 kg/cm², gemäß der EP-PS 206 685 flüssiges Kohlendioxid bei Temperaturen von -30°C bis 31,1°C eingesetzt. Für die Durchführung dieser Verfahren benötigt man jedoch spezielle Druckapparaturen.

In den deutschen Patentanmeldungen P 39 26 869 und P 40 00 278 werden ein Verfahren zur Herstellung eines anorganischen Sinterformteils durch Verformen eines Gemisches aus einem sinterbaren anorganischen Pulver und Polyoxymethylen (z.B. gemäß EP-A 114 746) als Bindemittel durch Spritzgießen oder Strangpressen zu einem Grünkörper, Entfernung des Bindemittels und Sintern beschrieben, wobei man das Polyoxymethylen durch Behandeln des Grünkörpers in einer gasförmigen, säurehaltigen Atmosphäre entfernt. Als Säuren werden bei diesem Verfahren Protonensäuren eingesetzt, also Säuren, die bei Reaktion mit Wasser in ein Proton (hydratisiert) und ein Anion gespalten werden, oder BF₃ oder dessen Etherate eingesetzt.

Bei Verwendung von reinem Polyoxymethylen mit geringem Comonomeranteil als Bindemittel in den Verfahren der vorstehend genannten älteren deutschen Patentanmeldungen bei der Herstellung von Formkörpern bzw. Formteilen mit größeren Wandstärken tritt jedoch ein Problem auf, welches durch die hohe Kristallisationsgeschwindigkeit des Polyoxymethylens hervorgerufen wird. Die Schmelze erstarrt an der Wand der beim Spritzgießen verwendeten, normalerweise gekühlten Form schneller als im Inneren, d.h. der innere Bereich des Formkörpers kristallisiert später als der äußere Teil. Da die Kristallisation von einer Volumenkontraktion begleitet ist, entstehen Risse im Inneren des Formkörpers, da die bereits erstarrten Außenteile der Volumenkontraktion nicht mehr folgen können.

In der bereits genannten EP-A 114 746 wird vorgeschlagen, vorzugsweise ein Polyoxymethylencopolymerisat mit 20 bis 80 Mol.% Comonomeranteil zu verwenden. Derartige Copolymerisate weisen einen niedrigeren Schmelzpunkt, eine niedrigere Kristallinität und eine erhöhte Weichheit und Flexibilität gegenüber den entsprechenden Polyoxymethylenhomopolymerisaten auf.

Dies hat jedoch auch zur Folge, daß die Abkühlzeiten deutlich verlängert und die Klebeneigung des Formteils in der Form erhöht wird. Die Entbinderung muß wegen der niedrigeren Schmelzpunkte der Copolymerisate auch bei niedrigeren Temperaturen vorgenommen werden, wodurch die zur Entbinderung benötigte Zeit länger wird.

EP-A-424 739, das einen Stand der Technik nach Artikel 54(3) EPÜ darstellt, offenbart ein Verfahren zur Herstellung von Formlingen auf der Basis von metallischen Fasern und einem thermoplastischen Bindemittel

Der vorliegenden Erfindung lag daher die Aufgabe zugrunde, thermoplastische Massen für die Herstellung metallischer Formkörper zur Verfugung zu stellen, die die vorstehend beschriebenen Nachteile nicht aufweisen und aus denen in wirtschaftliche Verfahren riß- und porenfreie metallische Formkörper hergestellt werden können.

Diese Aufgabe wird erfindungsgemäß gelöst durch thermoplastische Massen gemäß Anspruch 1.

Bevorzugte Massen dieser Art sind den Unteransprüchen zu entnehmen.

Als Komponente A) enthalten die erfindungsgemäßen thermoplastischen Massen 40 bis 65, vorzugsweise 45 bis 60 Vol.% eines pulverförmigen Metalls oder einer pulverförmigen Metallegierung oder deren Mischungen.

Als Metalle, die in Pulverform enthalten sein können, seien nur beispielsweise Eisen, Cobalt, Nickel und Silizium genannt; Legierungen sind z.B. Leichtmetallegierungen auf der Basis von Aluminium und Titan sowie Legierungen mit Kupfer oder Bronze. Schließlich kommen auch Hartmetalle wie Wolframcarbid, Borcarbid oder Titannitrid in Kombination mit Metallen wie Cobalt und Nickel in Betracht. Letztere können bei der Herstellung von metallgebundenen Hartschneidwerkzeugen (sog. Cermets) eingesetzt werden.

Als Komponente B) enthalten die erfindungsgemäßen thermoplastischen Massen 35 bis 60, vorzugsweise 40 bis 55 Vol.% einer Mischung aus
B1) 85 bis 100, vorzugsweise 88 bis 98 Gew.-%, bezogen auf B), eines Polyoxymethylenhomo- oder -copolymerisats und
B2) 0 bis 15, vorzugsweise 5 bis 10 Gew.-% eines in B1) homogen gelösten oder mit einer mittleren Teilchengröße von weniger als 1 µm, vorzugsweise 0,01 bis 0,9, insbesondere 0,1 bis 0,8 µm dispergierten Polymerisats als Bindemittel.

Die Polyoxymethylenhomo- oder -copolymerisate sind dem Fachmann an sich bekannt und in der Literatur beschrieben.

Die Homopolymeren werden im allgemeinen durch Polymerisation von Formaldehyd oder Trioxan hergestellt, vorzugsweise in der Gegenwart von geeigneten Katalysatoren.

Im Rahmen der Erfindung bevorzugte Polyoxymethylencopolymere enthalten neben den wiederkehrenden Einheiten -OCH₂- noch bis zu 50, vorzugsweise 0,1-20 und insbesondere 0,3-10 mol.% an wiederkehrenden Einheiten 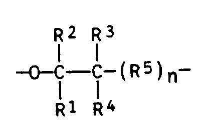
wobei R¹ bis R⁴ unabhängig voneinander ein Wasserstoffatom, eine C₁-C₄-Alkylgruppe oder eine halogensubstituierte Alkylgruppe mit 1-4 C-Atomen und R⁵ eine -CH₂-, -CH₂O-, eine C₁-C₄-Alkyl- oder C₁-C₄-Haloalkyl substituierte Methylengruppe oder eine entsprechende Oxymethylengruppe darstellen und n einen Wert im Bereich von 0-3 hat. Vorteilhafterweise können diese Gruppen durch Ringöffnung von cyclischen Ethern in die Copolymere eingeführt werden. Bevorzugte cyclische Ether sind solche der Formel 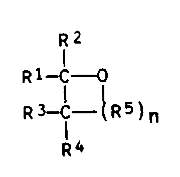
wobei R¹-R⁵ und n die oben genannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan und Dioxepan als cyclische Ether genannt sowie linare Oligo- oder Polyformale wie Polydioxolan oder Polydioxepan als Comonomere genannt.

Als Komponente B) ebenfalls geeignet sind Oxymethylenterpolymerisate, die beispielsweise durch Umsetzung von Trioxan, einem der vorstehend beschriebenen cyclischen Ether mit einem dritten Monomeren, vorzugsweise einer bifunktionellen Verbindung der Formel 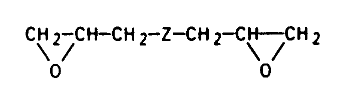
wobei Z eine chemische Bindung, -O- oder -ORO- (R= C₁-C₈-Alkylen oder C₂-C₈-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2 : 1 sowie Diether aus 2 mol Glycidylverbindung und 1 mol eines aliphatischen Diols mit 2-8-C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol um nur einige Beispiele zu nennen.

Verfahren zur Herstellung der vorstehend beschriebenen Homo- und Copolymerisate sind dem Fachmann bekannt und in der Literatur beschrieben, so daß sich hier nähere Angaben erübrigen.

Die bevorzugten Polyoxymethylenhomo- bzw. Copolymerisate haben Schmelzpunkte von mindestens 150°C und Molekulargewichte (Gewichtsmittelwert) im Bereich von 5000 bis 150000, vorzugsweise von 7000 bis 60000.

Als Komponente B2) eignen sich grundsätzlich Polymerisate, die in Polyoxymethylenhomo- oder -copolymerisat B1) homogen löslich oder darin in der geforderten Teilchengröße dispergierbar sind.

Bevorzugte Polymerisate dieser Art sind aliphatische Polyurethane, aliphatische unvernetzte Polyepoxide, Poly-(C₂-C₆)-alkylenoxide aliphatische Polyamide und Polyacrylate sowie deren Mischungen.

Geeignete aliphatische Polyurethane werden in bekannter Weise durch Polyaddition von alkalischen Polyisocyanaten, insbesondere aliphatischen Diisocyanaten und aliphatischen Polyhydroxylverbindungen wie Polyestern, Polyethern, Polyesteramiden oder Polyacetalen oder Gemischen davon hergestellt, gegebenenfalls in Anwesenheit von Kettenverlängerern.

Geeignete aliphatische Polyisocyanate sind insbesondere aliphatische Diisocyanate der allgemeinen Formel

OCN-R⁶-NCO

in der R⁶ ein gesättigter geradkettiger oder verzweigter aliphatischer Rest mit 1 bis 20, vorzugsweise 2 bis 12 C-Atomen oder ein unsubstituierter oder substituierter gesättigter cycloaliphatischer zweiwertiger Rest mit 4 bis 20, vorzugsweise 6 bis 15 C-Atomen ist.

R⁶ kann in obiger Formel auch eine Kombination von zweiwertigen offenkettigen aliphatischen und cycloaliphatischen Resten darstellen und beispielsweise die Bedeutung 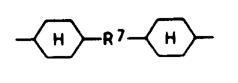
haben, worin R⁷ einen gesättigten geradkettigen oder verzweigten aliphatischen Rest mit 1 bis 8, vorzugsweise 1 bis 3 C-Atomen bedeutet. Die beiden Ringe stehen dabei vorzugsweise für das unsubstituierte Cyclohexan, während R⁷ vorzugsweise die Methylen-, Ethylen-, Methylmethylen- oder Dimethylmethylen-Gruppe bedeutet.

Falls R⁶ einen offenkettigen zweiwertigen Rest darstellt, so steht er vorzugsweise für einen unverzweigten Alkylidenrest (-CH₂)ₙ- mit n = 2 bis 12. Beispiele hierfür sind der Ethyliden-, Propyliden-, Pentamethylen- und der Hexamethylenrest sowie der 2-Methylpentamethylen-, der 2,2,4-Trimethyl-hexamethylen- oder der 2,4,4-Trimethylhexamethylenrest. Diisocyanate dieses Typs, die besonders bevorzugt werden, sind das Hexamethylen-diisocyanat sowie 2,2,4- und 2,4,4-Trimethylhexamethylen-diisocyanat.

Wenn R⁶ in obiger Formel einen cycloaliphatischen Rest bedeutet, so ist dies bevorzugt der unsubstituierte oder substituierte Cyclohexanrest. Beispiele für Diisocyanate dieses Typs sind 1,2- oder 1,4-Di-(iso-cyanatomethyl)-cyclohexan oder Isophorondiisocyanat.

Die Diisocyanate können auch in oligomerer, beispielsweise in dimerer oder trimerer Form zum Einsatz kommen. Anstelle der Polyisocyanate können auch in bekannter Weise blockierte Polyisocyanate verwendet werden, die man aus den genannten Isocyanaten, z.B. durch Addition von Phenol oder Caprolactam erhält.

Als aliphatische Polyhydroxylverbindungen kommen Polyether, wie Polyethylenglykolether, Polypropylenglykolether und Polybutylenglykolether, Poly-1,4-butandiolether oder Mischpolyether aus Ethylenoxid und Propylenoxid in Betracht. Außerdem können für diesen Zweck Polyesteramide, Polyacetale und vorzugsweise aliphatische Polyester eingesetzt werden, wobei alle diese Verbindungen freie OH-Endgruppen besitzen.

Bei den vorzugsweise verwendeten aliphatischen Polyestern handelt es sich im wesentlichen um unvernetzte Polyester mit Molekulargewichten von 500 bis 10 000, vorzugsweise von 500 bis 5 000. Hinsichtlich der Säurekomponente leiten sie sich von unverzweigten und/oder verzweigten aliphatischen Dicarbonsäuren ab, wie z.B. Dicarbonsäuren der allgemeinen Formel

HOOC-(CH₂)ₙ-COOH

mit n = 0 bis 20, vorzugsweise 4 bis 10, insbesondere Adipinsäure und Sebacinsäure. Auch cycloaliphatische Dicarbonsäuren, wie Cyclohexandicarbonsäure sowie Gemische mit den obigen aliphatischen Dicarbonsäuren können für diesen Zweck eingesetzt werden.

Als Alkoholkomponente für diese Polyester kommen vor allem unverzweigte oder verzweigte aliphatische primäre Diole, wie z.B. Diole der allgemeinen Formel

HO-(CH₂)ₘ-OH

in Betracht, in der m = 2 bis 12, vorzugsweise 2 bis 6 bedeutet. Genannt seien hier insbesondere Ethylenglykol, 1,4-Butandiol, 1,6-Hexandiol und 2,2-Dimethylpropandiol-1,3 sowie Diethylenglykol. Auch cycloaliphatische Diole, wie Bis-hydroxymethyl-cyclohexane, oder Gemische mit den aliphatischen Diolen sind hierfür geeignet.

Die Polyester können aus jeweils einer Dicarbonsäure und einem Diol, aber auch, wie erwähnt, aus Gemischen mehrerer Dicarbonsäuren und/oder mehreren Diolen hergestellt werden.

Als Kettenverlängerer bei der Herstellung der Polyurethane sind vor allem niedermolekulare Polyole, insbesondere Diole sowie Polyamine, insbesondere Diamine oder auch Wasser in Betracht zu ziehen.

Die Polyurethane sind vorzugsweise thermoplastisch und damit vorzugsweise im wesentlichen unvernetzt, d.h. wiederholt ohne nennenswerte Zersetzungserscheinungen schmelzbar. Ihre reduzierten spezifischen Viskositäten, gemessen bei 30°C in Dimethylformamid, liegen in der Regel bei 0,5 bis 3 dl/g, vorzugsweise bei 1 bis 2 dl/g.

Als aliphatische unvernetzte Polyepoxide seien hier nur Polymerisate von Glycidyl(meth)acrylat oder Epichlorhydrin mit geeigneten Comonomeren erwähnt. Bevorzugt werden Copolymerisate aus Epichlorhydrin und 2,2-Bis-(4-hydroxyphenyl)propan (Bisphenol A), die unter den Bezeichnungen Epikote® und Phenoxy® kommerziell erhältlich sind.

Geeignete Poly(C₂-C₆)alkylenoxide sind insbesondere Polyethylenoxid, Polypropylenoxid und Poly-tetrahydrofuran (Poly(tetramethylen)oxid) mit mittleren Molekulargewichten (Zahlenmittelwert) im Bereich von 2 000 bis 20 000, bevorzugt 5 000 bis 10 000. Entsprechende Produkte sind im Handel erhältlich und Herstellungsverfahren dem Fachmann bekannt, so daß sich hier nähere Angaben erübrigen.

Geeignete aliphatische Polyamide sind insbesondere amorphe Polyamide oder Polyamide mit einem geringen kristallinen Anteil.

Eine bevorzugte Gruppe solcher Polyamide enthält Einheiten die sich ableiten von Diaminen der Formel 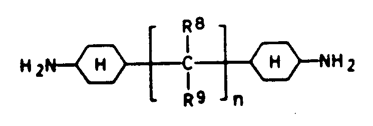
wobei R⁸ und R⁹ unabhängig voneinander jeweils H oder eine Methyl- oder Ethylgruppe bedeuten und n einen Wert im Bereich von 0 - 6 annimmt, und die Cyclohexylringe alkylsubstituiert sein können und aliphatischen Dicarbonsäuren wie Adipinsäure, Azelainsäure, Sebacinsäure und Dodecandisäure.

Diamine dieser Struktur werden im allgemeinen als Dicyan-Diamine bezeichnet; bevorzugte Diamine dieses Typs sind 4,4'-Diaminodicyclohexylmethan 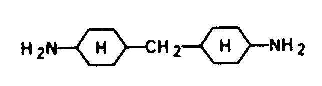
sowie die an den Cyclohexylringen methylsubstituierten Derivate davon.

Neben den vorstehenden Einheiten enthalten bevorzugte Polyamide bevorzugt weitere Einheiten, die sich von Lactamen oder Salzen aus weiteren aliphatischen Diaminen und aliphatischen Dicarbonsäuren ableiten.

Bevorzugte Lactame sind ε-Caprolactam und Önanthlactam, bevorzugte Salze solche aus Adipinsäure und Hexamethylendiamin. Das molare Verhältnis der unterschiedlichen Einheiten unterliegt keiner besonderen Beschränkung und kann daher in weiten Grenzen variieren.

Bevorzugt werden Polyamide mit Einheiten, die sich von ε-Caprolactam, Adipinsäure/Hexamethylendiamin und Adipinsäure/4,4'-Diaminodicyclohexylmethan ableiten.

Eine weitere bevorzugte Gruppe amorpher Polyamide enthält Einheiten, die sich von alkylsubstituierten Hexamethylendiaminen ableiten und den vorstehend genannten aliphatischen Dicarbonsäuren ableiten, wobei wiederrum weitere Einheiten der vorstehend beschriebenen Art vorhanden sein können.

Die Herstellung derartiger Polyamide erfolgt durch Polykondensation der Monomerbestandteile in den entsprechenden Anteilen; entsprechende Kondensationsverfahren sind dem Fachmann bekannt.

Als letzte Gruppe von Polymerisaten B2) seien Polyacrylate genannt, wie sie z.B. in der DE 38 05 052 beschrieben sind.

Diese sind zu 40 - 100 Gew.-% aus Methylacrylat oder Ethylacrylat oder deren Mischungen und zu 0 - 60 Gew.-% aus Einheiten, die sich von Monomeren der Formel 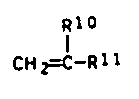
ableiten, aufgebaut. R¹⁰ steht dabei für H oder einen Methylrest und R¹¹ für einen Phenylring oder einen Rest der Formel 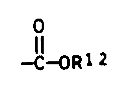
wobei R¹² eine Alkylgruppe mit 1 - 14 C-Atomen darstellt und R¹² nicht -CH₃ oder -C₂H₅ ist, wenn R¹⁰ ein Wasserstoffatom ist.

Derartige Polyacrylate sind mit Polyoxymethylenhomo- und Copolymerisaten verträglich, was dadurch zum Ausdruck kommt, daß die Mischung nur eine Glasübergangstemperatur (Tg) aufweist oder die Tg-Werte der Einzelkomponente sich verschieben. Derartige aus den Monomeren der Formel I und gegebenenfalls weiteren Monomeren, vorzugsweise der Formel II aufgebaute Polymere können nach bekannten Polymerisationsverfahren vorzugsweise radikalisch, beispielsweise durch Emulsions- bzw. Perl-, Lösungs- oder Substanzpolymerisation hergestellt werden (vgl. Kirk-Othmer, Encyclopedia of Chemical Technology 3rd Ed., Vol. 1, pp. 330 - 342, Vol. 18, pp. 720 - 755, J. Wiley; H. Rauch-Puntigam, Th. Völker, Acryl- und Methacrylverbindungen). Als Initiator kommen Radikal-Initiatoren wie Peroxyverbindungen und Azoverbindungen in Frage, in Abhängigkeit von den Monomeren und dem Polymerisationstyp, wobei die Initiator-Mengen im allgemeinen im Bereich von 0,001 bis 0,5 Gew.-%, bezogen auf die Monomeren, liegen.

Für die Emulsionspolymerisation kommen z.B. Peroxydisulfate oder gegebenenfalls Redoxsysteme, für die Substanzpolymerisation sowohl Peroxide wie Dibenzoylperoxid oder Dilauroylperoxid, als Azoverbindungen z.B. Azoisobutyrodinitril in Betracht, ebenso bei Lösungspolymerisation oder Perlpolymerisation. Zur Regelung des Molekulargewichts können die üblichen Regler, insbesondere Mercaptane, z.B. Dodecylmercaptan angewendet werden.

Vorzugsweise erfolgt die Polymerisation bei erhöhter Temperatur z.B. oberhalb 50°C. Das Molekulargewicht liegt im allgemeinen im Bereich von 2000 bis 5 000 000 vorzugsweise 20 000 bis 3 000 000 (Bestimmung durch Lichtstreuung: Zur Bestimmung der Molgewichte vgl. Houben-Weyl, Methoden der Org. Chemie, 4. Auflage, Bd. 14/1, Georg Thieme-Verlag Stuttgart 1961).

Als Komponente C können die erfindungsgemäßen thermoplastischen Massen 0 - 5, vorzugsweise 1 - 5 Vol.-% eines Dispergierhilfsmittels enthalten. Beispielhaft seien hier nur oligomeres Polyethylenoxid mit einem mittleren Molekulargewicht von 200 - 600, Stearinsäure, Hydroxistearinsäure, Fettalkohole, Fettalkoholsulfonate und Blockcopolymere aus Ethylen- und Propylenoxid genannt.

Zusätzlich können die thermoplastischen Massen auch übliche Zusatzstoffe und Verarbeitungshilfsmittel, die die rheologischen Eigenschaften der Mischungen bei der Verformung günstig beeinflussen, enthalten.

Die Herstellung der erfindungsgemäßen thermoplastischen Massen erfolgt nach dem erfindungsgemäßen Verfahren durch Aufschmelzen der Komponente B), vorzugsweise in einem Zweischneckenextruder, bei Temperaturen von vorzugsweise 150 bis 220°C, insbesondere 170 bis 200°C. Die Komponente A) wird anschließend bei Temperaturen im gleichen Bereich, in der erforderlichen Menge zu dem Schmelzstrom der Komponente B) dosiert. Vorteilhafterweise enthält die Komponente A) auf der Oberfläche das oder die Dispergierhilfsmittel C).

Eine besonders bevorzugte Vorrichtung zur Dosierung der Komponente A) enthält als wesentliches Element eine in einem heizbaren Metallzylinder befindliche Förderschnecke, die die Komponente A) in die Schmelze der Komponente B) fördert.

Das vorstehend beschriebene Verfahren hat gegenüber der Mischung der Komponenten bei Raumtemperatur und anschließender Extrusion unter Temperaturerhöhung den Vorteil, daß eine Zersetzung des als Bindemittel eingesetzten Polyoxymethylens infolge der bei dieser Variante auftretenden hohen Scherkräfte weitgehend vermieden wird.

Für die Verformung durch Spritzguß können die üblichen Schnecken- und Kolbenspritzgußmaschinen eingesetzt werden. Die Verformung erfolgt im allgemeinen bei Temperaturen von 175 bis 200°C und Drucken von 3000 bis 20 000 kPa in Formen, die eine Temperatur von 60 - 120°C aufweisen.

Die Extrusion zu Rohren, Stauden und Profilen erfolgt vorzugsweise bei 170 bis 200°C.

Zur Entfernung des Bindemittels (Entbindung) werden die nach der Verformung enthaltenen Grünkörper vorzugsweise zunächst in Anlehnung an das Verfahren der älteren deutschen Patentanmeldungen P 39 29 869 bzw. 40 00 278 zunächst mit einer gasförmigen säurehaltigen Atmosphäre behandelt.

Diese Behandlung erfolgt nach den erfindungsgemäßen Verfahren bei Temperaturen im Bereich von 20 bis 180°C über einen Zeitraum von 0,1 bis 24 h, vorzugsweise 0,5 bis 12 h.

Geeignete Säuren für die Behandlung in dieser ersten Stufe des erfindungsgemäßen Verfahrens sind anorganische, bei Raumtemperatur bereits gasförmige, zumindest aber bei der Behandlungstemperatur verdampfbare Säuren. Beispielhaft seien die Halogenwasserstoffsäuren und HNO₃ genannt. Geeignete organische Säuren sind solche, die bei Normaldruck eine Siedetemperatur von weniger als 130°C haben, z.B. Ameisensäure, Essigsäure oder Trifluoressigsäure oder deren Mischungen.

Weiterhin geeignet als Säure sind BF₃ oder dessen Addukte an organische Ether. Ganz allgemeinen hängt die erforderliche Behandlungsdauer von der Behandlungstemperatur und der Konzentration der Säure in der Behandlungstemperatur und der Konzentration der Säure in der Behandlungsatmosphäre ab.

Wird ein Trägergas verwendet, so wird dies im allgemeinen vorher durch die Säure geleitet und mit dieser beladen. Das so beladene Trägergas wird dann auf die Behandlungstemperatur gebracht, die zweckmäßigerweise höher als die Beladungstemperatur ist, um eine Kondensation der Säure zu vermeiden.

Bevorzugt wird die Säure über eine Dosiereinrichtung dem Trägergas zugemischt und die Mischung so weit erwärmt, daß die Säure nicht mehr kondensieren kann.

Die Behandlung in der ersten Stufe wird so lange durchgeführt, bis der Polyoxymethylenanteil B1) des Bindemittels zu mindestens 80 %, vorzugsweise zu mindestens 90 Gew.-%, entfernt ist. Dies läßt sich leicht an der Gewichtsabnahme erkennen. Anschließend wird das so erhaltene Produkt 0,1 bis 12, vorzugsweise 0,3 bis 6 h auf 250 bis 500, vorzugsweise 350 bis 450°C erhitzt, um den noch vorhandenen Rest des Bindemittels vollständig zu entfernen.

Das so vom Bindemittel befreite Produkt kann in üblicher Weise durch Sintern in einen metallischen Formkörper überführt werden.

Die erfindungsgemäßen thermoplastischen Massen haben den Vorteil, daß die daraus hergestellten Grünkörper bzw. metallischen Formkörper auch bei großen Wandstärken frei von Rissen und Poren sind.

### Beispiel 1

In einen Doppelwellenextruder mit 30 mm Wellendurchmesser wurden 5,6 kg/h eines Polyoxymethylens dosiert, das 2,5 Gew.-% Butandiolformial als Comonomeres enthielt. Das Material wurde bei 180°C aufgeschmolzen, die Wellendrehzahl betrug 70 Upm.

In einen seitlichen an diesen Extruder angeflanschten Extruder, der mit einer Förderwendel für Pulver ausgerüstet ist, wurden 39,5 kg/h Eisenpulver, die 1 Gew.-% eines Polyethylenoxids der Molmasse 400 g/Mol als Dispergator enthielt, dosiert und bis zum Ende der Förderstrecke auf 170°C erwärmt.

Am Ende der Förderstrecke wurde das Metallpulver mit dem Polyoxymethylenstrom vermischt, die Mischung geschert, homogenisiert und als Stränge durch Düsen gepreßt. Die Stränge wurden in einem Luftstrom abgekühlt und granuliert. Das so erhaltene Granulat enthielt ca. 55 Vol.-% Eisenpulver.

Es wurde im Zylinder einer Schneckenspritzgußmaschine bei 180°C aufgeschmolzen und in eine Form mit einer Wandtemperatur von 110°C gespritzt, um Scheiben mit einem Durchmesser von 80 mm und einer Dicke von 4 mm herzustellen.

Damit wurde ein Anteil von ca. 54 Vol.-% Metallpulver in der Mischung erreicht. Die Spritzgußverarbeitung erfolgte unter den gleichen Bedingungen wie in Bsp. 1. Die Röntgendurchstrahlung zeigte keine Risse in den so hergestellten Zylindern.

Die sich anschließende Entbinderung wurde in einem nahezu dichten Trockenschrank mit einem Volumen von 50 l durchgeführt. Die Atmosphäre innerhalb des Trockenschranks wurde mittels eines Ventilators stark umgewälzt, um eine konstante Temperatur im gesamten Volumen und eine gute Wärmeübertragung auf den zu entbindernden Körper zu erreichen.

Der Trockenschrank wurde mit einer der spritzgegossenen Scheiben bestückt und zwar so, daß die Scheibe an einem Draht aufgehängt wurde, der durch das Gehäuse des Trockenschranks nach oben durchgeführt und mit einer Waage verbunden war, um kontinuierlich den Gewichtsverlust zu messen.

Danach wurde der Schrank 20 min lang mit einem Stickstoffstrom von 400 l/h durchströmt, um die Luft bis zu einem O₂-Gehalt kleiner als 1 - 2 % zu verdrängen. Gleichzeitig wurde die Atmosphäre im Trockenschrank auf 150°C aufgeheizt. Die Entbinderung wurde mit dem Zudosieren von 35 g/h 68 gew.-%iger Salpetersäure zum Stickstoffstrom von 400 l/h gestartet, so daß die Konzentration der Salpetersäure im dosierten Gasstrom ca. 2 Vol-% betrug.

Bei einem Ausgangsgewicht des Zylinders von 100,0 g betrug der Binderanteil 12,7 Gew.-% entsprechend 12,7 g. Die folgende Tabelle zeigt die Gewichtsabnahme als Funktion der Zeit:

| Zeit (min) | Gewichtsabnahme (g) | Entbinderungsgrad (%) |
|---|---|---|
| 0 | 0 | 0 |
| 10 | 3,56 | 28,0 |
| 20 | 5,94 | 46,8 |
| 30 | 7,26 | 57,2 |
| 40 | 8,76 | 69,0 |
| 50 | 10,17 | 80,1 |
| 60 | 11,75 | 92,5 |
| 70 | 12,32 | 97,0 |

### Beispiel 2

In einem Doppelwellenextruder mit 30 mm Wellendurchmesser wurden 5,5 kg/h einer Mischung aus 87 Gew.-% eines Polyoxymethylens, das 2,5 Gew.-% Butandiolformal als Comonomeres enthält sowie 13 Gew.-% Polymethylacrylat einer mittleren Molmasse um 100.000 dosiert. Das Material wurde bei 180°C aufgeschmolzen, die Wellendrehzahl betrug 70 Upm.

In einen seitlich an diesen Extruder angeflanschten Extruder, der mit einer Förderwendel für Pulver ausgerüstet war, wurden 11,4 kg/h Siliziumpulver mit einem mittleren Partikeldurchmesser um 5 µm, das 1 Gew.-% Polyethylenoxid der Molmasse 400 g/Mol als Dispergator enthält, dosiert und bis zum Ende der Förderstrecke auf 170°C erwärmt. Am Ende der Förderstrecke wurde das Siliziumpulver mit dem Polyoxymethylenschmelzestrom vermischt, die Mischung geschert, homogenisiert und als Stränge durch Düsen gepreßt.

Die Stränge wurden in einem Luftstrom abgekühlt und granuliert.

Das so erhaltene Granulat, das ca. 54 Vol.-% Siliziumpulver enthielt, wurde einer Schneckenspritzgußmaschine zugeführt. Es wird im Zylinder der Spritzgußmaschine bei 180°C aufgeschmolzen und in eine Form mit einer Wandtemperatur von 110°C gespritzt, um Scheiben mit 80 mm Durchmesser und 4 mm Wandstärke zu erhalten.

Die sich anschließende Entbinderung wurde in einem nahezu dichten Trockenschrank mit einem Volumen von 50 l durchgeführt. Die Atmosphäre innerhalb des Trockenschranks wird mittels eines Ventilators stark umgewälzt, um eine konstante Temperatur im gesamten Volumen und eine gute Wärmeübertragung auf den zu entbindernden Körper zu erreichen.

Der Trockenschrank wurde mit einer der spritzgegossenen Scheiben bestückt und zwar so, daß die Scheibe an einem Draht aufgehängt wurde, der durch das Gehäuse des Trockenschranks nach oben durchgeführt und mit einer Waage verbunden war, um kontinuierlich den Gewichtsverlust zu messen.

Danach wurde der Schrank 20 min lang mit einem Stickstoffstrom von 400 l/h durchströmt, um die Luft bis zu einem O-Gehalt kleiner als 1 - 2 % zu verdrängen. Gleichzeitig wurde die Atmosphäre im Trockenschrank auf 150°C aufgeheizt. Die Entbinderung wurde gestartet mit dem Zudosieren von 10 l/h BF₃ zum Stickstoffstrom von 400 l/h, so daß die Konzentration das BF₃ in der Dosierung 2,5 Vol.-% betrug.

Bei einem Ausgangsgewicht der Scheibe von 38,1 g betrug der Binderanteil 32,5 Gew.-% entsprechend 12,4 g. Die folgende Tabelle zeigt die Gewichtsabnahme als Funktion der Zeit:

| Zeit (min) | Gewichtsabnahme (g) | Entbinderungsgrad (%) |
|---|---|---|
| 0 | 0 | 0 |
| 5 | 3,56 | 28,0 |
| 10 | 5,94 | 46,8 |
| 15 | 7,26 | 57,2 |
| 20 | 8,76 | 69,0 |
| 25 | 10,17 | 80,1 |
| 30 | 11,75 | 92,5 |
| 35 | 12,02 | 97,0 |

Danach wurde die Scheibe innerhalb von 1 h auf 400°C gehalten. Dabei nahm das Gewicht um weitere 0,38 g ab, entsprechend einem Entbinderungsgrad von 100 %. Die Scheibe zeigte weder Risse noch irgendeine Dimensionsänderung.

## Patentansprüche

1. Thermoplastische Massen für die Herstellung metallischer Formkörper, enthaltend
A) 40 - 65 Vol.% eines sinterbaren pulverförmigen Metalls oder einer pulverförmigen Metallegierung oder deren Mischungen,
B) 35 - 60 Vol.% einer Mischung aus
B1) 85 - 100 Gew.-% eines Polyoxymethylenhomo- oder -copolymerisats und
B2) 0 - 15 Gew.-% eines in B1) homogen gelösten oder mit einer mittleren Teilchengröße von weniger als 1 µm in B1) dispergierten Polymerisats,
als Bindemittel, und
C) 0 - 5 Vol.% eines Dispergierhilfsmittels.

2. Thermoplastische Massen nach Anspruch 1, dadurch gekennzeichnet, daß als Komponente B2) aliphatische Polyurethane, aliphatische unvernetzte Polyepoxide, Poly(C₂-C₆-alkylenoxide), aliphatische Polyamide oder Polyacrylate oder deren Mischungen enthalten sind.

3. Verwendung der thermoplastischen Massen nach den Ansprüchen 1 - 2, zur Herstellung von metallischen Formkörpern.

4. Metallische Formkörper, hergestellt aus thermoplastischen Massen gemäß den Ansprüchen 1 - 2.

5. Verfahren zur Herstellung einer thermoplastischen Masse, enthaltend als wesentliche Komponenten
A) 40 - 65 Vol.% eines sinterbaren pulverförmigen Metalls oder einer pulverförmigen Metallegierung oder deren Mischungen,
B) 35 - 60 Vol.% einer Mischung aus
B1) 85 - 100 Gew.-% eines Polyoxymethylenhomo- oder -copolymerisats und
B2) 0 - 15 Gew.-% eines in B1) homogen gelösten oder mit einer mittleren Teilchengröße von weniger als 1 µm in B1) dispergierten Polymerisats,
als Bindemittel, und
C) 0 - 5 Vol.% eines Dispergierhilfsmittels,
dadurch gekennzeichnet, daß man
a) die Komponente B) bei Temperaturen von 150 - 220°C aufschmilzt und anschließend
b) die Komponente A) gegebenenfalls zusammen mit C) bei Temperaturen im gleichen Bereich wie in Schritt a) zu dem Schmelzestrom der Komponente B) dosiert.

6. Verfahren zur Entfernung des Bindemittels aus einem Formkörper aus einer thermoplastischen Masse gemäß den Ansprüchen 1 - 3, dadurch gekennzeichnet, daß man
a) durch Spritzguß oder Extrusion einen Formkörper aus der thermoplastischen Masse herstellt,
b) den so erhaltenen Formkörper bei einer Temperatur im Bereich von 20 bis 180°C 0,1 - 24 h mit einer gasförmigen säurehaltigen Atmosphäre behandelt und
c) anschließend 0,1 - 12 h auf eine Temperatur von 250 - 500°C erhitzt.

## Claims

1. A thermoplastic composition for producing a metallic molding, containing
A) 40 - 65% by volume of a sinterable pulverulent metal or of a pulverulent metal alloy or of a mixture thereof,
B) 35 - 60% by volume of a mixture of
B1) 85 - 100% by weight of a polyoxymethylene homopolymer or copolymer and
B2) 0 - 15% by weight of a polymer homogeneously dissolved in B1) or dispersed therein with an average particle size of less than 1 µm,
as binder, and
C) 0 - 5% by volume of a dispersant.

2. A thermoplastic composition as claimed in claim 1, wherein component B2) is an aliphatic polyurethane, an aliphatic uncrosslinked polyepoxide, a poly(C₂-C₆-alkylene oxide), an aliphatic polyamide or polyacrylate or a mixture thereof.

3. The use of a thermoplastic composition as claimed in claim 1 or 2 for producing a metallic molding.

4. A metallic molding produced from a thermoplastic composition as claimed in claim 1 or 2.

5. A process for preparing a thermoplastic composition containing as essential components
A) 40 - 65% by volume of a sinterable pulverulent metal or of a pulverulent metal alloy or of a mixture thereof,
B) 35 - 60% by volume of a mixture of
B1) 85 - 100% by weight of a polyoxymethylene homopolymer or copolymer and
B2) 0 - 15% by weight of a polymer homogeneously dissolved in B1) or dispersed therein with an average particle size of less than 1 µm,
as binder, and
C) 0 - 5% by volume of a dispersant,
which comprises
a) melting component B) at 150 - 220°C and then
b) metering component A) into the melt stream of component B) with or without C) at a temperature within the same range as in step a).

6. A process for removing the binder from a preform produced from a thermoplastic composition as claimed in claim 1 or 2 or 3, which comprises
a) producing a preform from the thermoplastic composition by injection or extrusion molding,
b) treating the resulting preform at from 20 to 180°C with a gaseous acid-containing atmosphere for 0.1 - 24 h, and
c) then heating it at 250 - 500°C for 0.1 - 12 h.

## Revendications

1. Matières thermoplastiques pour la fabrication d'articles moulés métalliques, qui contiennent
A) 40 à 65% en volume d'un métal pulvérulent, ou d'un alliage de métaux pulvérulent, frittable, ou de leurs mélanges,
B) 35 à 60% en volume d'un mélange constitué de
B1) 85 à 100% en poids d'un homopolymère ou d'un copolymère de polyoxyméthylène et
B2) 0 à 15% en poids d'un polymère dissous de manière homogène dans B1), ou dispersé dans B1) avec un calibre moyen des grains inférieur à 1 µm,
à titre de liant et
C) 0 à 5% en volume d'un adjuvant de dispersion.

2. Matières thermoplastiques suivant la revendication 1, caractérisées en ce qu'elles contiennent, à titre de composant B2), des polyuréthannes aliphatiques, des polyépoxydes aliphatiques non réticulés, des poly(oxydes d'alkylène en C₂-C₆), des polyamides aliphatiques, ou des polyacrylates, ou leurs mélanges.

3. Utilisation des matières thermoplastiques suivant les revendications 1 et 2, en vue de la fabrication d'articles moulés métalliques.

4. Articles moulés métalliques, fabriqués à partir des matières thermoplastiques suivant les revendications 1 et 2.

5. Procédé de fabrication d'une matière thermoplastique, qui contient, à titre de constituants essentiels,
A) 40 à 65% en volume d'un métal pulvérulent, ou d'un alliage de métaux pulvérulent, frittable, ou de leurs mélanges,
B) 35 à 60% en volume d'un mélange constitué de
B1) 85 à 100% en poids d'un homopolymère ou d'un copolymère de polyoxyméthylène et
B2) 0 à 15% en poids d'un polymère dissous de manière homogène dans B1), ou dispersé dans B1) avec un calibre moyen des grains inférieur à 1 µm,
à titre de liant et
C) 0 à 5% en volume d'un adjuvant de dispersion,
caractérisé en ce que
a) on fait fondre le composant B) à des températures de 150 à 220°C et, ensuite
b) on introduit de manière dosée le composant A), éventuellement en même temps que le composant C), à des températures qui se situent dans la même plage que celle des températures de l'étape a) dans le courant fondu du composant B).

6. Procédé pour l'élimination du liant d'un article moulé à partir d'une matière thermoplastique suivant l'une quelconque des revendications 1 à 3, caractérisé en ce que
a) on fabrique un corps moulé à partir de la masse thermoplastique par moulage par injection ou extrusion,
b) on traite l'article moulé ainsi obtenu à une température qui varie de 20 à 180°C, pendant une durée qui fluctue de 0,1 à 24 heures, par une atmosphère contenant de l'acide et gazeuse et
c) on procède ensuite à un chauffage à une température de 250 à 500°C pendant 0,1 à 12 heures.
